# EUROPÄISCHE PATENTANMELDUNG

(11) **EP 2 648 258 A1**
(43) Veröffentlichungstag der Anmeldung: **09.10.2013**
(21) Anmeldenummer: 13162337.3
(22) Anmeldetag: 04.04.2013
(51) Int. Cl.: H01M 8/18, G01N 21/05, G01N 21/80, H01M 8/04

(54) **Ladestandsüberwachung einer Vanadium-Redox-Durchflussbatterie**

(30) Priorität: 04.04.2012 DE 102012006776
(71) Anmelder: Bozankaya BC&C, 38239 Salzgitter (DE)
(72) Erfinder: Rudolph, Stephan, 38459 Bahrdorf (DE)
(74) Vertreter: Einsel, Martin

(57) **Zusammenfassung**

Die Erfindung betrifft ein Verfahren zur Bestimmung und/oder Überwachung des Ladestandes eines Elektrolyten (33), insbesondere eines Elektrolyten (33) einer Durchflussbatterie (1), nämlich die Bestimmung und Überwachung des Ladezustandes des Anolyten und/oder des Katolyten, umfassend das Bestimmen der sich durch Laden und/oder Entladen ändernden Verhältnisse der chemischen Zusammensetzung des Elektrolyten (33) anhand der Ionenladung eines oder der chemischen Bestandteile des Elektrolyten (33), sowie einen Ladestandssensor (7) zur Bestimmung des Ladestandes eines Elektrolyten (33), insbesondere eines Anolyten und/oder eines Katolyten, durch Bestimmen der sich durch Laden und/oder Entladen ändernden Verhältnisse der chemischen Zusammensetzung des Elektrolyten (33) anhand der lonenladung eines oder der chemischen Bestandteile des Elektrolyten (33). Ferner betrifft die Erfindung eine Durchflussbatterie (1) sowie ein Verfahren zur Be- und/oder Endladung einer Durchflussbatterie (1).

## Beschreibung

Die Erfindung betrifft ein Verfahren zur Bestimmung und/oder Überwachung des Ladestandes eines Elektrolyten einer Vanadium-Redox-Durchflussbatterie, nämlich die Bestimmung und Überwachung des Ladezustandes des Anolyten und/oder des Katolyten. Die Erfindung betrifft außerdem einen Ladestandssensor zur Bestimmung des Ladestandes eines Elektrolyten einer Vanadium-Redox-Batterie, insbesondere eines Anolyten und/oder eines Katolyten, durch Bestimmen der sich durch Laden und/oder Entladen ändernden Verhältnisse der chemischen Zusammensetzung des Elektrolyten anhand der Ionenladung eines oder der chemischen Bestandteile des Elektrolyten.

Ferner betrifft die Erfindung eine Vanadium-Redox-Durchflussbatterie, aufweisend einen ersten elektrochemischen Energiewandler, einen ersten Vorratstank für einen Elektrolyten, Elektrolytleitungen zur Zu- und Abführung eines oder mehrerer Elektrolyten von dem Vorratstank zu dem elektrochemischen Energiewandler und weiter zurück in den jeweiligen Vorratstank in Form eines Kreislaufprozesses, und einem Laderegler, einem Inverter und/oder einer Batteriesteuerung zur Steuerung der Be- und Entladung der Energie. Schließlich betrifft die Erfindung ein Verfahren zur Be- und/oder Entladung einer Vanadium-Redox-Durchflussbatterie.

Eine Durchflussbatterie ist eine wiederaufladbare Batterie, bei der die Energie chemisch in flüssigen Elektrolyten (salzhaltige wässrige Lösungen) gespeichert wird bzw. ist. Durchflussbatterien (flow battery) werden auch als Redox-Durchflussbatterien oder nur als Redox-Batterien bezeichnet, wenn in ihnen eine Reduktion und eine Oxidation abläuft.

Bei diesen Batterietypen werden Tanks zur Bevorratung der Elektrolyten vorgesehen, in denen sich das gesamte reaktive Material in flüssiger Form befindet. Beim Laden und Entladen werden die Elektrolyten in einem geschlossenen Kreislaufsystem transportiert, wobei elektrische Energie in chemisch gebundener Form dem System entzogen bzw. hinzugefügt wird (Reduktion / Oxidation), so dass ein chemischer Energiespeicher realisiert ist.

Das Kreislaufsystem umfasst neben den Vorratsbehältern für die Elektrolyten auch Rohrleitungssysteme, die Elektrolytleitungen, in denen die Elektrolyten mittels Pumpen oder dgl. transportiert werden.

Es gibt zwei Elektrolyten, einen für die positive Reaktion und einen für die negative Reaktion. Die beiden Elektrolyten werden nicht miteinander vermischt, sondern sind in einer Reaktionszelle, dem elektrochemischen Reaktionsraum, durch eine sehr dünne Membran voneinander getrennt. Die sehr dünne Membran ist eine ionenleitende Membran, die ausgewählte Ionen von einer zur anderen Seite durchlässt.

Im elektrochemischen Reaktionsraum befinden sich weiterhin auch sehr stabile Kollektoren (bspw. poröse Kohlenstoffelektroden), an denen die kritischen Reaktionen ablaufen. Da die Reaktionen nur die gelösten Salze betreffen, unterliegen die Kollektoren selbst keiner chemischen oder physikalischen Veränderung weshalb eine große Anzahl an Lade- und Entladezyklen möglich ist, ohne dass dabei eine signifikante Abnahme der Kapazität erfolgt.

Die Redox-Durchflussbatterien unterscheidet sich darin auch von Hybrid Durchflussbatterien (wie z.B. Zink-Brom Systeme), welche eine reaktive Elektrode besitzen und damit ebenfalls von Einschränkungen konventioneller Batterietechnologien betroffen sind, da diese Elektroden mit der Zeit stark abnutzen.

Ein sehr spezieller Typ ist die Vanadium-Redox-Durchflussbatterie. Die Vanadium-Salze sind im negativen als auch im positiven Elektrolyten in unterschiedlichen Oxidationsstufen vorhanden. Insbesondere ist Vanadium durch seine vier ausgezeichneten unterschiedlichen Oxidationsstufen, in denen es stabile Lösungen ausbildet, besonders gut geeignet, um als chemischer Speicher in Durchflussbatterien zu fungieren. Eine entsprechende Durchfluss-Batterie mit diesen Vanadium-Elektrolyten erreicht quasi beliebig viele Zyklen der Auf- und Entladung, wobei gleichzeitig eine sehr hohe Energiedichte pro Volumen beziehungsweise pro Masse erreicht wird.

Derartige Vanadium-Redox-Durchflussbatterien sind für die Energieversorgung von Elektromotoren in Kraftfahrzeugen besonders sinnvoll, da es zumindest physikalisch möglich erscheint, dass diese Energiespeicher eine ausreichende elektrische Energiemenge speichern können, um realistisch nutzbare und sinnvolle Reichweiten eines Kraftfahrzeuges bis zur nächsten Wiederaufladung zu erreichen. Weitere interessante Anwendungsgebiete sind beispielsweise die Speicherung elektrischer Energie in Haushalten, die photovoltaische Anlagen betreiben, oder beispielsweise Windenergieanlagen oder -parks. Auch der Einsatz als sehr großer Energiespeicher ist sinnvoll und zudem äußerst effizient. Beispielsweise können ganze Fabriken mit Energie über einen gewissen Zeitraum versorgt werden, ohne dass es zu einer Stromunterbrechung kommt.

Derartige Durchflussbatterien sind bereits in den 1950 er Jahren in Ansätzen in der Druckschrift DE 914 264 B beschrieben worden, wobei auch die chemische Speicherung von Energie mittels Reduktion und Oxidation beispielhaft erörtert wird. Weiter wird hier ein Gas zum Transportieren der Elektrolyten verwendet.

Weiter ist aus der US-PS 4,786,567 eine Durchflussbatterie mit Vanadium als Elektrolyten bekannt, die zur Speicherung von elektrischer Energie in chemischer Form dient. Außerdem ist dort ein Verfahren zum Be- und Entladen der Batterie angegeben.

Problematisch an den bisher im Stand der Technik bekannten Durchflussbatterien ist die Schwierigkeit, den aktuell vorhandenen Ladestand der Durchflussbatterie zu bestimmen, ohne dabei über eine Spannungsmessung eine derartige Auswertung durchzuführen. Der Ladestand einer Durchflussbatterie wird fachsprachlich häufig mit SOC abgekürzt, was für die englischsprachige Formulierung "State of Charge" steht.

Ein Vorschlag für die Bestimmung des Ladestandes in einer sehr speziellen Redox-Durchflussbatterie ist in der US 2008/0193828 A1 angegeben. Dort geht es um Durchflussbatterien, die mit einer Eisenchlorid (FeCl₂)-Lösung auf der Kathodenseite und mit einer Chromchlorid (CrCl₃)-Lösung auf der Anodenseite arbeitet. Modifiziert arbeitet sie mit einem Eisen-Chrom-System, bei dem FeCl₂-und CrCl₃-Lösungen in verschiedenen Verhältnissen als Anolyte und Katolyte eingesetzt werden. Die chemische Zusammensetzung der Elektrolyte ändert sich abhängig von dem Ladezustand während des Ladens und Entladens der Durchflussbatterie. In der US 2008/0193828 A1 wird nun vorgeschlagen, ein recht günstiges Verhalten der Fe/Cr-Anolyte und -Katolyte dazu zu nutzen, mittels eine Spektrofotometers und eines Strahlteilers und eines halbtransparenten Spiegels als Strahlteiler Strahlengänge durch die Zelle zu legen und die Absorption zur Bestimmung des Ladestandes heranzuziehen.

Leider sind die Gedanken, die bei diesen Fr/Cr-Elektrolyten funktionieren, auf andere Kombinationen nicht anzuwenden, wenn dort nicht ebenfalls die gleichen Voraussetzungen vorliegen.

Darüber hinaus ist der vorgeschlagene Messaufbau zwar für Forschungszwecke geeignet, nicht aber für den praktischen Einsatz in einer Serie, wie dies etwa bei einem Einsatz in Kraftfahrzeugen unbedingt berücksichtigt werden müsste.

Beim Betrieb von Redox-Durchflussbatterien, insbesondere auch beim Betrieb von den besonders interessanten Vanadium-Redox-Flow-Batterien ist in der Praxis nicht feststellbar, wie genau der aktuelle Ladestand der Durchflussbatterie ist. Die Spannung nimmt zwar während des Nutzungsvorgangs, also dem Entladevorgang, der Batterie kontinuierlich ab, genau wie dies bereits von herkömmlichen Bleibatterien beispielsweise in Kraftfahrzeugen bekannt ist. Dieser Spannungsabfall ist aber ebenso wie bei den Bleibatterien sehr langsam und somit als Messwert kaum heranzuziehen. Der sehr langsame Spannungsabfall ist auch beabsichtigt und für Batterien wichtig, da die Spannung nach Möglichkeit über den gesamten Zyklus möglichst konstant sein soll.

Eine Messung dieser Spannung ist darüber hinaus gerade während der Benutzung der Batterie relativ kritisch und stört auch die Benutzung als solche. Ebenso werden durch den Verbrauch selbst auch die Messwerte der Spannung beeinflusst. Insgesamt führt dies nun dazu, dass kaum eine Aussage über den Ladestand der Durchflussbatterie getroffen werden kann und insbesondere ob womöglich demnächst eine Aufladung notwendig ist.

Bei der Verwendung einer derartigen Durchflussbatterie in einem Kraftfahrzeug ohne eine exakte Anzeige der möglichen Restenergie würde dies bedeuten, dass nur geschätzt werden könnte, wie lange man noch mit einem entsprechend ausgestalteten Fahrzeug fahren könnte, was in etwa mit dem Fehlen einer Tankanzeige in einem mit Benzin oder Diesel betriebenen Verbrennungsmotors eines Kraftfahrzeuges gleichzusetzen wäre.

Weiter problematisch ist der Ladevorgang, bei dem ebenfalls nicht mit Gewissheit festgestellt werden kann, welchen Ladestand die Durchflussbatterie gerade aufweist. Erfolgt während des Ladevorgangs ein Laden über einen bestimmten Ladezustand hinaus, können erhebliche Schäden an den verschiedenen Bauteilen der Durchflussbatterie, beispielsweise der Membran oder des Kollektors, insbesondere des Katodenkollektors der positiven Halbzelle, eintreten, die nicht abschätzbar sind.

Der vorliegenden Erfindung liegt die Aufgabe zugrunde, eine Vanadium-Redox-Durchflussbatterie sowie einen Ladestandssensor und entsprechende Steuerverfahren anzugeben, mittels derer der aktuelle Ladestand der Vanadium-Redox-Durchflussbatterie während des Be- und Entladens kontinuierlich und unabhängig von der Spannung der Durchflussbatterie gemessen bzw. detektiert werden kann.

Gelöst wird diese Aufgabe mit einem Verfahren zur Bestimmung und/oder Überwachung des Ladestandes eines Elektrolyten einer Vanadium-Redox-Durchflussbatterie nach Anspruch 1, einem Ladestandssensor nach Anspruch 4, einer Vanadium-Redox-Durchflussbatterie nach Anspruch 7 sowie einem Verfahren zur Be- und/oder Entladung einer Durchflussbatterie nach Anspruch 13.

Dadurch, dass das Verfahren zur Bestimmung und/oder Überwachung des Ladestandes eines Elektrolyten einer Vanadium-Redox-Durchflussbatterie, nämlich die Bestimmung und Überwachung des Ladezustandes des Anolyten und/oder des Katolyten, das Bestimmen der sich durch Laden und/oder Entladen ändernden Verhältnisse der chemischen Zusammensetzung des Elektrolyten anhand der Ionenladung eines oder der chemischen Bestandteile des Elektrolyten umfasst, ist eine Bestimmung des Ladestandes des Elektrolyten möglich. Insbesondere wird hier der Elektrolyt in einer Vanadium-Redox-Durchflussbatterie verwendet, wobei die Bestimmung und/oder Überwachung des Ladestandes des Elektrolyten zumindest nahezu kontinuierlich erfolgt.

Von Vorteil ist es, dass das Verhältnis der chemischen Zusammensetzung des Elektrolyten mit einem Ladestand referenziert wird. Hierbei kann eine Kalibrierung durchgeführt werden, so dass beispielsweise eine zentrale Steuer-und/oder Auswerteeinheit einen entsprechenden Ladestandswert ausgibt.

Das Bestimmen der chemischen Zusammensetzung des Elektrolyten umfasst die Schritte:
a) Senden elektromagnetischer Strahlung einer, mehrerer und/oder zeitlich veränderter Wellenlängen durch den Elektrolyten;
b) Detektieren der Intensität in Abhängigkeit von der Wellenlänge der den Elektrolyten durchquerenden elektromagnetischen Strahlung;
c) Auswerten der Intensität, insbesondere der Intensitätsabnahme, zwischen der Intensität der ausgesandten elektromagnetischen Strahlung und der Intensität der den Elektrolyten durchlaufenden elektromagnetischen Strahlung.

Zur Durchführung des Verfahrens erfolgt das Senden und Detektieren der elektromagnetischen Strahlung mit einer konstanten, vorgegebenen und/oder auf den Elektrolyten und dessen chemische Zusammensetzung abgestimmten Wellenlänge, bevorzugt im Infrarotwellenlängenbereich, besonders bevorzugt im Wellenlängenbereich zwischen 800 nm und 1000 nm, insbesondere für eine Vanadium-Redox-Flow-Batterie.

Für andere chemische Bestandteile können andere Wellenlängen bzw. Wellenlängenbereiche gewählt werden, bei denen entsprechende Absorptionen auftreten.

Zur Auswertung der Intensität erfolgt eine Auswertung über den zeitlichen Verlauf, wobei insbesondere die Änderung der Intensität ausgewertet wird.

Die elektromagnetische Strahlung tritt mit einer vorgegebenen Intensität in den Elektrolyten ein und wird in diesem in deren Intensität verringert. Hierbei ist der Ladestandssensor in seiner Funktion auf die Absorption der elektromagnetischen Strahlung innerhalb des Elektrolyten ausgerichtet. Durch diesen Effekt erfolgt eine Intensitätsverringerung der elektromagnetischen Strahlung, die detektierbar ist. Die Intensität der elektromagnetischen Strahlung wird also bedingt durch den vorgenannten Effekt verringert. Es erfolgt ein Vergleich der Intensitäten vor dem Eintritt in den Elektrolyten und nach dem Durchtritt durch den Elektrolyten, wobei die Intensität durch Absorption verringert ist. Aus der gesendeten Intensität und der empfangenen Intensität ergibt sich ein Intensitätsverlust der elektromagnetischen Strahlung. Aus dieser Differenz kann auf die chemische Zusammensetzung der Bestandteile der Durchflussbatterie bzw. des Elektrolyten und somit auch auf dessen Ladestand geschlossen werden.

Selbstverständlich können weitere anordnungsbedingte Intensitätsverluste auftreten, die selbstverständlich über entsprechende Kalibrierungen ausgeblendet werden können.

Zur Bestimmung des Ladestandes einer Vanadium-Redox-Durchflussbatterie reicht das Identifizieren einer der vier elektrochemischen Stufen des Vanadiums aus, da eine zweite der vier Stufen aufgrund des ähnlichen elektrochemischen Aufbaus auch mit der gleichen Frequenz feststellbar ist und die beiden anderen Anteile sich dann durch mathematische Berechnungen ergeben.

Ein Ladestandssensor zur Bestimmung des Ladestandes eines Elektrolyten, insbesondere eines Anolyten und/oder eines Katolyten, durch Bestimmen der sich durch Laden und/oder Entladen ändernden Verhältnisse der chemischen Zusammensetzung des Elektrolyten anhand der Ionenladung eines oder mehrerer der chemischen Bestandteile des Elektrolyten insbesondere zur Ausführung des zuvor genannten Verfahrens umfasst einen Sender zur Aussendung von elektromagnetischer Strahlung durch den Elektrolyten und einen Detektor zur Detektion der elektromagnetischen Strahlung, die den Elektrolyten durchquert hat.

Weiter sind eine entsprechende Auswerteeinheit und eine Verbindung zur Steuerung der Durchflussbatterie vorgesehen.

Der Frequenzbereich von Sender und Detektor liegt im Infrarotbereich, besonders bevorzugt im Wellenlängenbereich zwischen 800 nm und 1000 nm, da in diesem Bereich entsprechende Absorptionen bei zwei der vier Stufen des Vanadiums erfolgen, so dass diese Wellenlängen gerade besondere Bereiche sind, in denen entsprechende Intensitätsmaxima und/oder Intensitätsminima beim Vanadium detektierbar sind.

Dadurch, dass der Ladestandssensor einen optisch transparenten Durchgangsbereich aufweist, durch den der Elektrolyt geleitet wird, wobei der Sender und der Detektor entsprechend an dem Durchgangsbereich angeordnet sind, werden die Nebeneffekte, die die Intensität der ausgesandten elektromagnetischen Strahlung reduzieren, deutlich reduziert. Hierbei soll der Durchgangsbereich auf die ausgestrahlten Wellenlängen abgestimmt werden. Beispielsweise sollte bei Infrarotlicht ein Glasröhrchen verwendet werden. Weitere alternative Materialien sind jedoch nicht ausgeschlossen.

Eine Vanadium-Redox-Durchflussbatterie weist einen ersten elektrochemischen Energiewandler, einen ersten Vorratstank für einen Elektrolyten, Elektrolytleitungen zur Zu- und Abführung eines oder mehrerer Elektrolyten von dem Vorratstank zu dem elektrochemischen Energiewandler und weiter zurück in den jeweiligen Vorratstank in Form eines Kreislaufprozesses, und einem Laderegler, einem Inverter und/oder einer Batteriesteuerung zur Steuerung der Be- und Entladung der Energie, auf, wobei ein Ladestandssensor zur Bestimmung des Ladestandes eines Elektrolyten, insbesondere eines Anolyten und/oder eines Katolyten, durch Bestimmen der sich durch Laden und/oder Entladen ändernden Verhältnisse der chemischen Zusammensetzung des Elektrolyten anhand der Ionenladung eines oder der chemischen Bestandteile des Elektrolyten, insbesondere entsprechend einem zuvor beschriebenen Ladestandssensor, sowie insbesondere zur Ausführung des zuvor beschriebenen Verfahrens, in und/oder an der Elektrolytleitung vor, in, an und/oder hinter dem Energiewandler und/oder dem oder den Vorratstanks vorgesehen ist.

Hierzu ist der Ladestandssensor mit dem Laderegler, Inverter und/oder der Batteriesteuerung verbunden. Bei Über- oder Unterschreiten von vorgegebenen Ladeständen erfolgt die Sicherung der Durchflussbatterie, um auf diese Weise Schäden an der Durchflussbatterie, an den Kollektoren sowie den weiteren Bauteilen zu verhindern.

Insbesondere ist der Ladestandssensor als optisch arbeitendes System ausgebildet und umfasst einen Sender und einen Detektor, wobei zwischen dem Sender und dem Detektor das Elektrolyt geführt ist und der Sender elektromagnetische Strahlung ausstrahlt, die den Elektrolyten durchquert und vom Detektor erfasst, wobei der Detektor die Intensität der elektromagnetischen Strahlung nach dem Durchqueren des Elektrolyten detektiert.

Der Sender sendet elektromagnetische Strahlung durch den Elektrolyten, und zwar besonders bevorzugt zeitgleich mit einer oder mehreren auf die chemischen Redox-wirksamen Bestandteile abgestimmten und/oder mit zeitlich variierenden Wellenlängen. Der Detektor detektiert die ausgesandte und den Elektrolyten durchquerende elektromagnetische Strahlung, besonders bevorzugt die Intensität der elektromagnetischen Strahlung.

Insbesondere ist eine Auswerteeinheit zur Auswertung der Intensität der den Elektrolyten durchlaufenden elektromagnetischen Strahlung, besonders bevorzugt zur Auswertung der zeitlichen Änderung der Intensität der den Elektrolyten durchlaufenden elektromagnetischen Strahlung vorgesehen.

VO₂⁺, umgangssprachlich auch als V5 bezeichnet, ist das am höchsten oxidierte Vanadium. Es stellt die höchste Stufe der Ionisierung im Katolyten dar. Es ist ein starkes Reduktionsmittel und insbesondere elektrochemisch sehr aggressiv. Der Katolyt, als reines oder überwiegend vorliegendes VO₂⁺, kann die Bauteile der Batterie angreifen und die Batterie unbrauchbar werden lassen. VO₂⁺ gibt während des Ladevorganges keine weiteren Elektronen ab und führt damit zu einem Anstieg des Innenwiderstandes der Batterie. Während der Ladung kann durch diesen Anstieg ein Anstieg des Halbzellenpotentials, bedingt durch den Stromfluss, verbunden sein. Diese Folge führt bei Verwendung diesbezüglich nicht inerter Werkstoffe zur Zerstörung des Katodenkollektors.

Zum Schutz der Komponenten vor der vollständigen Umwandlung des Katolyten zu VO₂⁺ mit den genannten Folgewirkungen lässt sich der Ladestandssensor erfolgreich verwenden. Ein weiterer Anwendungsfall des Sensors ist damit der Schutz vor elektrochemischer Zersetzung des Katodenkollektors der positiven Halbzelle der Batterie.

Bei einer Vanadium-Redox-Durchflussbatterie weist das Katolyt mit einem Ladezustand zwischen 0 % und 99 % nur eine sehr geringe Änderung der Absorption auf. In dem Bereich zwischen 99 % und 100 % des Ladezustandes (wie hingegen tritt ein nichtlinearer Effekt ein, durch welchen die Absorption spontan um mehrere Größenordnungen abnimmt.)

Dadurch kann dieses vom Detektor festgestellte Signal nicht oder in erster Linie nicht als Monitor für den Ladezustand eingesetzt werden, sondern es wird als Schaltsignal für das Erreichen beziehungsweise das Abfallen des Ladezustandes unter die Schwelle von 99 %, beziehungsweise über 99 % genutzt. Auf diese Weise kann es insbesondere als Schutzfunktion gegenüber einer Oxidation des Kollektormaterials genutzt werden.

Die Detektion für den Ladezustand des Anolyten dagegen kann man in erster Linie als Monitor einsetzen.

Insgesamt können die Detektionen auch genutzt werden, um erste entstehende Gasungen zu detektieren. Dies gilt sowohl für den Anolyten als auch für den Katolyten einer Vanadium-Redox-Durchfalussbatterie. Die Detektion einer Gasung ist sehr wichtig, denn sie zeigt sowohl jeweils eine Überladung des Elektrolyten wie auch eine parasitäre Nebenreaktion an.

Von besonderem Vorteil ist es, dass für den Ladestandsensor und für die Vanadium-Redox-Durchflussbatterie erfindungsgemäß keine halbtransparenten Spiegel als Strahlteiler benötigt werden. Dies reduziert nicht nur die Kosten für die gesamte Anlage, sondern es reduziert auch den benötigten Bauraum für die entsprechenden Aggregate. Auch das Gewicht des Gesamtkomplexes wird so reduziert, was bei einem Einsatz in Kraftfahrzeugen von besonderem Interesse ist.

Bei mehreren elektrochemischen Energiewandlern und/oder bei mehreren in einem elektrochemischen Energiewandler angeordneten Elektroden ist jeweils ein Ladestandssensor einem elektrochemischen Energiewandler zugeordnet. Man könnte auch davon sprechen, der Ladestandssensor sei jeweils einer Elektrode, einer Halbzelle oder einem Abschnitt zugeordnet. Dabei ist dann eine entsprechende Steuerung jedes einzelnen elektrochemischen Energiewandlers bzw. jeder einzelnen Elektrode oder Halbzelle oder für den jeweiligen zugeordneten Abschnitt vorgesehen. Gleichwohl ist aber auch die Ausgestaltung mit nur einem Ladestandssensor bei einer entsprechenden aufgesplitteten Energiewandleranordnung ausreichend, um den Ladestand zu bestimmen.

Das Verfahren zur Be- und/oder Entladung einer Durchflussbatterie, bevorzugt nach einem zuvor beschriebenen Verfahren, einem zuvor erläuterten Ladestandssensor und/oder einer diskutierten Durchflussbatterie, beinhaltet eine kontinuierliche Überwachung des Elektrolyten auf sich verändernde Intensität des den Elektrolyten durchquerten elektromagnetischen Strahlung, wobei bei der Detektion einer veränderten chemischen Zusammensetzung des Elektrolyten ein Ladestandssignal an eine Batteriesteuerung signalisiert wird, und eine Änderung in der Regelung der Be- und/oder Entladung der Durchflussbatterie auslöst, wobei insbesondere die Änderung in der Regelung der Be- und/oder Entladung der Durchflussbatterie eine Anpassung der Spannung zwischen den Elektroden, bevorzugt eine Reduzierung der Spannung, beinhaltet.

Weitere vorteilhafte Ausgestaltungen können den Unteransprüchen und den Figuren entnommen werden.

Nachfolgend werden Ausführungsbeispiele der Erfindung anhand der beiliegenden Zeichnungen detailliert beschrieben.

Darin zeigen:
- **Fig. 1**: eine schematische Darstellung einer Redox-Durchflussbatterie;
- **Fig. 2**: eine schematische Darstellung eines ersten Ausführungsbeispiels eines Ladestandssensors an Elektrolytleitungen;
- **Fig. 3**: eine detaillierte Darstellung der Detektion der durch den Elektrolyten gesendeten elektromagnetischen Strahlung in einer ersten chemischen Zusammensetzung des Elektrolyten;
- **Fig. 4**: eine detaillierte Darstellung der Detektion der durch den Elektrolyten gesendeten elektromagnetischen Strahlung in einer zweiten chemischen Zusammensetzung des Elektrolyten, und
- **Fig. 5**: eine detaillierte Darstellung des Ladestandssensors in einer weiteren Ausführungsform.

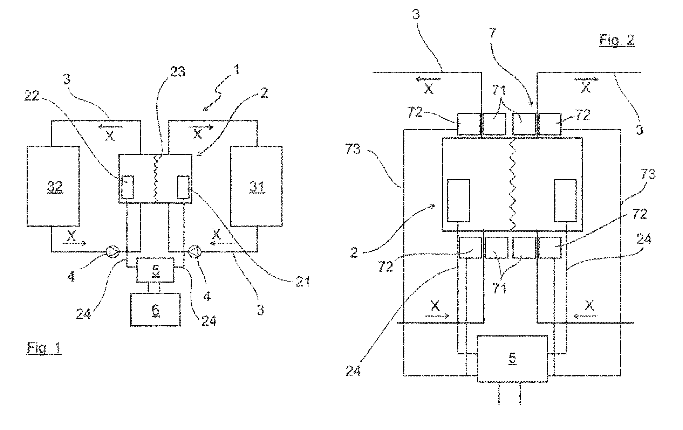

In **Fig. 1** ist eine schematische Darstellung einer Redox-Durchflussbatterie 1 dargestellt. Hierbei handelt es sich um die Darstellung des generellen Aufbaus der Redox-Durchflussbatterie 1.

Die Redox-Durchflussbatterie 1 besteht aus einem elektrochemischen Energiewandler 2, der über Elektrolytleitungen 3 mit Vorratstanks, nämlich einem Vorratstank 31 für den positiven Elektrolyt 33 und einem Vorratstank 32 für den negativen Elektrolyt 33, verbunden ist. Hierbei bilden sich zwei Kreisläufe aus, nämlich ein erster Kreislauf, der des positiven Elektrolyts 33 und ein zweiter Kreislauf, der des negativen Elektrolyts 33. Die Elektrolyten 33 werden mit Hilfe von Pumpen 4 in ihren jeweiligen Kreisläufen durch den elektrochemischen Energiewandler 2 geführt, wo der jeweilige Elektrolyt 33 auf- bzw. entladen werden kann (Reduktion bzw. Oxidation).

Der elektrochemische Energiewandler 2 besteht aus zwei Kammern, die durch eine ionenleitende Membran 23 voneinander getrennt sind. Durch diese beiden Kammern fließt jeweils einer der Elektrolyten 33. In diesem Ausführungsbeispiel ist in der linken Kammer die negative Elektrode 22 angeordnet und es fließt dort der negative Elektrolyt 33 durch. In der rechten Kammer ist die positive Elektrode 21 angeordnet und es fließt dort der positive Elektrolyt 33 durch. Die Elektroden 21, 22 sind über elektrische Leitungen 24 mit einem Laderegler, einem Inverter und/oder einer Batteriesteuerung 5 verbunden. Die Batteriesteuerung bzw. der Laderegler und/oder Inverter 5 steuert dabei die Spannung zwischen den Elektroden 21, 22 und damit auch die Auf- und Entladung der Durchflussbatterie 1.

Die Energie kommt von einer Stromquelle 6 bzw. wird abgeführt zu einem Verbraucher 6, die bzw. der mit dem Laderegler, Inverter und/oder der Batteriesteuerung 5 verbunden sind.

Die Flussrichtung X zeigt die Richtung des Elektrolytentransportes an.

Im Weiteren werden für gleiche Elemente die gleichen Bezugszeichen wie in Fig. 1 verwendet. Zu deren prinzipieller Funktion wird auf Fig. 1 verwiesen.

In **Fig. 2** ist eine schematische Darstellung eines ersten Ausführungsbeispiels eines Ladestandssensors 7 an Elektrolytleitungen 3 dargestellt.

Hierbei ist die Redox-Durchflussbatterie 1 aus Figur 1 um einen erfindungsgemäßen Ladestandssensor 7 erweitert. Der Ladestandssensor 7 besteht im Wesentlichen aus einem Sender 71 und einem Empfänger 72.

Der Sender 71 sendet elektromagnetische Strahlung 74 gleicher, unterschiedlicher und/oder zeitlich veränderbarer Wellenlänge durch den jeweiligen Elektrolyten 33. Diese ausgesandte elektromagnetische Strahlung 74 wird im Anschluss an das Durchqueren des Elektrolyten 33 von dem Detektor 72 erfasst und insbesondere dessen Intensität detektiert und ausgewertet.

Der Ladestandssensor 7 ist über eine Steuerleitung 73 mit dem Laderegler, dem Inverter und/oder der Batteriesteuerung 5 verbunden, so dass die Signale entsprechend zur Steuerung der Batterie verwendet werden können.

Anhand der erfassten Intensität der elektromagnetischen Strahlung 74, besonders bevorzugt über die zeitliche Änderung der Intensität erfolgt das Detektieren der sich in dem Elektrolyten 33 verändernden chemischen Zusammensetzung der Bestandteile, nämlich die chemische Oxidation bzw. Reduktion der redox-relevanten Partner.

Der Ladestandssensor 7 ist in diesem Ausführungsbeispiel an einer Elektrolytleitung 3 angeordnet. Die Anordnung erfolgt im direkten Anschlussbereich der Elektrolytleitung 3 an den elektrochemischen Energiewandler 2. Gleichwohl ist aber auch eine Anordnung des Gasungssensors 7 im Bereich des elektrochemischen Energiewandlers 2 möglich. Eine derartige Anordnung ist in der Lage, den Ladestand an unterschiedlichen Stellen einer Redox-Durchflussbatterie 1 zu detektieren.

Redox-Durchflussbatterien 1 arbeiten mit der Änderung der Wertigkeit des entsprechend im Elektrolyten 33 vorgesehenen Salzes zur Speicherung der elektrischen Energie. Hierbei treten regelmäßig Farbumschläge auf, wobei dieser Effekt natürlich die Absorption etc. der elektromagnetischen Strahlung 74 beeinflusst. Jedoch ist die Änderung der Wertigkeit, quasi die Änderung des Ladungszustandes, zeitlich langsam, jedoch für die Bestimmung des Ladestandes vollkommen hinreichend. Hierdurch ist durch eine zeitliche Erfassung der Intensitätsänderung eine sehr genaue Aussage über den Ladestand der Redox-Durchflussbatterie 1 möglich. Der zeitliche Verlauf der Intensitätsänderung wird überwacht und gibt Aufschluss über den Zustand des Elektrolyten 33, also letztlich über die Existenz von bestimmten chemischen Bestandteilen innerhalb des Elektrolyten 33.

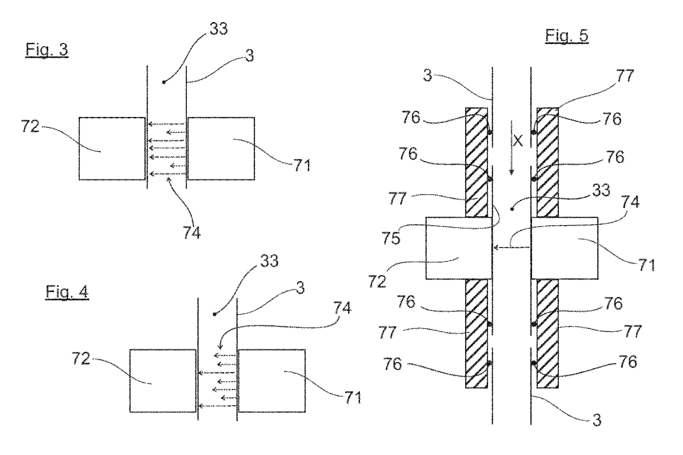

Zur detaillierten Beschreibung der Arbeitsweise des Ladestandssensors 7 wird auf die **Fig. 3** und **4** im Folgenden hingewiesen.

Die **Fig. 3** zeigt eine detaillierte Darstellung der Detektion der durch den Elektrolyten 33 gesendeten elektromagnetischen Strahlung 74 in einer ersten chemischen Zusammensetzung des Elektrolyten 33.

In dieser Darstellung sind die durch den Sender 71 ausgestrahlten und den Elektrolyten durchquerenden elektromagnetischen Strahlen 74 als gestrichelte Pfeile dargestellt und zeigen in der Ausgangsposition in Richtung des Detektors 72.

Ein Teil der elektromagnetischen Strahlung 74 geht nahezu ungehindert durch den Elektrolyten 33 hindurch und wird entsprechend nach dem Austritt aus dem Elektrolyten 33 von dem Detektor 72 detektiert. Dies ist entsprechend als durchlaufende elektromagnetische Strahlung dargestellt. Jedoch an den Stellen, wo die speziell abgestimmte elektromagnetische Strahlung 74 einer definierten Wellenlänge innerhalb des Elektrolyten 33 auf ein für diese Wellenlänge empfänglichen chemischen Bestandteil des Elektrolyten 33 trifft, erfolgt eine Absorption der ausgesandten elektromagnetischen Strahlung 74 , wodurch die detektierte Intensität am Detektor 72 reduziert ist.

In dieser Zusammensetzung der chemischen Bestandteile des Elektrolyten 33 erfolgt eine Detektion einer Intensität, die lediglich geringfügig verringert ist. Im Gegensatz zu dieser chemischen Zusammensetzung erfolgt unter Fig. 4 eine Detektion einer geringeren Intensität, da sich dort die chemische Zusammensetzung des Elektrolyten 33 geändert hat.

Die **Fig. 4** zeigt eine detaillierte Darstellung der Detektion der durch den Elektrolyten 33 gesendeten elektromagnetischen Strahlung 74 in einer zweiten chemischen Zusammensetzung des Elektrolyten 33.

In dieser Darstellung sind die durch den Sender 71 ausgestrahlten und den Elektrolyten durchlaufenden elektromagnetischen Wellen 74 einer definierten Wellenlänge deutlich in deren Intensität beim Detektor verringert, da ein Großteil der elektromagnetischen Strahlung 74 durch eine veränderte chemische Zusammensetzung, nämlich eine Reduktion oder eine Oxidation einzelner Bestandteile des Elektrolyten 33, hervorgerufen durch das Laden und/oder Entladen, nunmehr von einem entsprechend für die definierte Wellenlänge empfänglichen chemischen Bestandteil, nämlich einem reduzierten und/oder oxidierten Anolyten bzw. Katolyten absorbiert wird. Durch diese Absorption verringert sich die Intensität auf der Detektor 72 - Seite.

Nachfolgend soll dies anhand eines Beispiels erläutert werden:

Die Zusammensetzung des Elektrolyten ändert sich nach dem Ladestand im Beispiel der Vanadium Redox Flow Batterie in den Halbzellen gemäß nachfolgenden Reaktionen:

Positive Halbzelle: VO₂ + e- + 2H⁺ ⇔ VO₂⁺ + H₂O (1)

Negative Halbzelle: V³⁺ + e⁻ ⇔ V²⁺ (2)

Diese Änderungen werden durch den Ladestandssensor 7 mittels Detektion der absorbierten elektromagnetischen Strahlung 74 aufgrund des Durchquerens des Elektrolyten 33 erfasst. Hierbei ist es nun möglich ein Intensitätssignal zu erhalten, welches das Verhältnis von V³⁺ zu V²⁺ erfasst. Mit dieser Information ist es nach Reaktionsgleichung (2) möglich den Grad der Umwandlung zwischen V³⁺ zu V²⁺ zu bestimmen, welcher proportional zu dem Ladestand und damit proportional zu der verfügbaren Austauschenergiemenge im Anolyten ist.

Im Katolyten erfolgt eine sprunghaft ansteigende Absorption elektromagnetischer Strahlung 74 im Infrarotbereich mit einer Wellenlänge von etwa 950 nm ± 100 nm bei Vorhandensein von VO₂⁺ (umgangssprachlich auch als V4 bezeichnet). Ein proportionaler Zusammenhang über den Bereich der Zusammensetzung des Elektrolyten 33 im Katolyt ist nicht gegeben. Jedoch lässt sich für die beinahe, bis fast vollständige Umwandlung von VO₂⁺ (umgangssprachlich auch als V5 bezeichnet) eine hohe Transparenz für IR-Strahlung 74 feststellen. Damit kann der vollständige Ladestand des Katolyten als sprunghafter Anstieg der Transmission festgestellt werden.

Die vollständige Entladung, nämlich die chemische Zusammensetzung der relevanten Redox-Partner des Elektrolyten 33 bei ausschließlichem Vorhandensein von Vanadium-Monoxid VO₂⁺ des Katolyten kann ebenfalls als sprunghafter Anstieg der Transmission festgestellt werden. Dabei fällt die Intensität der detektierten elektromagnetischen Strahlung 74, also auch das Maximum der Transmission, deutlich kleiner aus. Somit lässt sich die vollständige Ladung bzw. Entladung nach der detektierten Intensität unterscheiden, wobei die Intensität der elektromagnetischen Strahlung 74 am Detektor 72 aufgrund der Absorption im Elektrolyten 33 verringert ist.

Zusammen mit der Information der Zusammensetzung der chemischen Bestanteile des Anolyten lassen sich mittels dieser IR-Absorption folgende Informationen herleiten: Ladestand des Anolyten über den Bereich der Umwandlung von V²⁺ zu V³⁺ und umgekehrt, Ladestand des Katolyten im Ladezustand fast vollständige bis vollständige Umwandlung zu VO₂⁺, sowie fast vollständige bis vollständige Umwandlung zu VO₂.

Bei der Synchronisation von Anolytladestand im Maximum mit dem Katolytladestand im Maximum lassen sich bei der folgenden Entladung der Ladestand der Batterie sowie der damit verbundene Energiegehalt des Elektrolyten 33 präzise opto-elektronisch erfassen.

Mittels der Transmissionssignale von Anolyt und Katolyt lassen sich die Elektrolyte 33 der Batterie bezüglich Ihres Redox-Potentiales synchronisieren. Auf diese Weise kann eine optimale Nutzung der elektrochemischen Speicherdichte beider Elektrolyte 33 erreicht werden, da ein vollständiger Austausch von Ladungen zwischen den Elektrolyten 33 nur dann erfolgen kann, wenn im Katolyt ebenso viele Ladungen aufgenommen werden können wie im Anolyt abgegeben werden können und umgekehrt.

In **Fig. 5** ist eine detaillierte Darstellung des Ladestandssensors 7 in einer weiteren Ausführungsform gezeigt.

Diese Darstellung zeigt eine unterbrochene Elektrolytzufuhrleitung 3, in der der Elektrolyt 33 transportiert wird. An der Unterbrechungsstelle ist nun der Ladestandssensor 7 mit einem Leitungsadapter 77 auf die Elektrolytzufuhrleitung 3 aufgesetzt. Hierbei wird der Anschluss bzw. der Übergang über Dichtungen 76 abgedichtet.

Der Leitungsadapter 77 bildet das Gehäuse für den Ladestandssensor 7. In dem Leitungsadapter ist der Sender 71 und der Detektor 72 eingearbeitet. Zudem ist der Durchgangsbereich zwischen dem Sender 71 und dem Detektor 72 als optisch transparenter Sensordurchgangskörper 75 ausgebildet. Dies ist beispielsweise ein Glasröhrchen, welches die elektromagnetische Strahlung 74 ohne negative Auswirkung auf die erforderliche Transmission passieren lässt.

Dieses Ausführungsbeispiel stellt eine bevorzugte Ausführungsform dar, ist jedoch eine Ausführungsvariante, wobei insbesondere die Anschlussbereiche unterschiedlich ausgebildet sein können. Hierzu wird auf Möglichkeiten zum Verbinden zweier Rohrabschnitte aus dem Stand der Technik verwiesen. Gleichwohl kann so ein Ladestandssensor 7 leicht ausgebaut, gewechselt oder umpositioniert werden.

Die dargestellten Ausführungsbeispiele sind nicht abschließend zu sehen, sondern stellen lediglich beispielhafte Ausführungsformen der erfindungsgemäßen Durchflussbatterie 1 mit dem bzw. des Ladestandssensors 7 dar.

Insbesondere kann der Ladestandssensor 7 auch im oberen Bereich des elektrochemischen Energiewandlers 2 und/oder an anderen Stellen der Elektrolytleitung 3 oder auch in einem Vorratstank 31, 32 vorgesehen werden.

Bevorzugt ist der Ladestandssensor 7 jedoch im und/oder am elektrochemischen Energiewandler 2 bzw. im daran in Flussrichtung X folgenden Elektrolytleitungsabschnitt 3 anzuordnen, da so frühzeitig der verbleibende Ladestand detektiert werden kann.

### Bezugszeichenliste

| | |
|---|---|
| 1 | Redox-Durchflussbatterie |
| 2 | elektrochemischer Energiewandler |
| 21 | positive Elektrode |
| 22 | negative Elektrode |
| 23 | ionenleitende Membran |
| 24 | elektrische Leitung |
| 3 | Elektrolytleitungen |
| 31 | Vorratstank positiver Elektrolyt |
| 32 | Vorratstank negativer Elektrolyt |
| 33 | wässriger Elektrolyt |
| 4 | Pumpe |
| 5 | Laderegler / Inverter / Batteriesteuerung |
| 6 | Stromquelle / Verbraucher |
| 7 | Ladestandssensor |
| 71 | Sender |
| 72 | Detektor |
| 73 | Steuerleitung |
| 74 | elektromagnetische Strahlung |
| 75 | optisch transparenter Sensordurchgangskörper / Glasröhre |
| 76 | Dichtung |
| 77 | Leitungsadapter |
| X | Flussrichtung Elektrolyt |

## Patentansprüche

1. Verfahren zur Bestimmung und/oder Überwachung des Ladestandes eines Elektrolyten (33) einer Vanadium-Redox-Durchflussbatterie (1), nämlich die Bestimmung und Überwachung des Ladezustandes des Anolyten und/oder des Katolyten,
**umfassend** das Bestimmen der sich durch Laden und/oder Entladen ändernden Verhältnisse der chemischen Zusammensetzung des Elektrolyten (33) anhand der Ionenladung eines oder mehrerer der chemischen Bestandteile des Elektrolyten (33).
**wobei** das Verhältnis der chemischen Zusammensetzung des Elektrolyten (33) mit einem Ladestand referenziert wird, und
**wobei** das Bestimmen der chemischen Zusammensetzung des Elektrolyten (33) die Schritte umfasst:
a) Senden elektromagnetischer Strahlung (74) einer, mehrerer und/oder zeitlich veränderter Wellenlängen durch den Elektrolyten (33);
b) Detektieren der Intensität in Abhängigkeit von der Wellenlänge der den Elektrolyten (33) durchquerenden elektromagnetischen Strahlung (74);
c) Auswerten der Intensität, insbesondere der Intensitätsabnahme, zwischen der Intensität der ausgesandten elektromagnetischen Strahlung (74) und der Intensität der den Elektrolyten (33) durchlaufenden elektromagnetischen Strahlung (74).

2. Verfahren zur Bestimmung und/oder Überwachung des Ladestandes eines Elektrolyten (33) nach Anspruch 1,
**dadurch gekennzeichnet,**
**dass** das Senden und Detektieren der elektromagnetischen Strahlung (74) mit einer konstanten, vorgegebenen und/oder auf den Elektrolyten und dessen chemische Zusammensetzung abgestimmten Wellenlänge, bevorzugt im Infrarotwellenlängenbereich, besonders bevorzugt im Wellenlängenbereich zwischen 800 nm und 1000 nm, erfolgt.

3. Verfahren zur Bestimmung und/oder Überwachung des Ladestandes eines Elektrolyten (33) nach Anspruch 1 oder 2,
**dadurch gekennzeichnet,**
**dass** zur Auswertung der Intensität eine Auswertung über den zeitlichen Verlauf erfolgt, wobei die Änderung der Intensität ausgewertet wird.

4. Ladestandssensor (7) zur Bestimmung des Ladestandes eines Elektrolyten (33) einer Vanadium-Redox-Durchflussbatterie, insbesondere eines Anolyten und/oder eines Katolyten, durch Bestimmen der sich durch Laden und/oder Entladen ändernden Verhältnisse der chemischen Zusammensetzung des Elektrolyten (33) anhand der Ionenladung eines oder mehrerer der chemischen Bestandteile des Elektrolyten (33), insbesondere zur Ausführung des Verfahrens nach einem der vorangehenden Ansprüche,
**umfassend**
einen Sender (71) zur Aussendung von elektromagnetischer Strahlung (74) durch den Elektrolyten (33) und
einen Detektor (72) zur Detektion der elektromagnetischen Strahlung (74), die den Elektrolyten (33) durchquert hat.

5. Ladestandssensor (7) nach Anspruch 4,
**dadurch gekennzeichnet,**
**dass** der Frequenzbereich von Sender (71) und Detektor (72) im Infrarotbereich, besonders bevorzugt im Wellenlängenbereich zwischen 800 nm und 1000 nm liegt.

6. Ladestandssensor (7) nach Anspruch 4 oder 5,
**dadurch gekennzeichnet,**
**dass** der Ladestandssensor (7) einen optisch transparenten Durchgangsbereich (34) aufweist, durch den der Elektrolyt (33) geleitet wird, wobei der Sender (71) und der Detektor (72) entsprechend an dem Durchgangsbereich (34) angeordnet sind.

7. Vanadium-Redox-Durchflussbatterie (1), aufweisend einen ersten elektrochemischen Energiewandler (2), einen ersten Vorratstank (31, 32) für einen Elektrolyten (33), Elektrolytleitungen (3) zur Zu- und Abführung (X) eines oder mehrerer Elektrolyten (33) von dem Vorratstank (31, 32) zu dem elektrochemischen Energiewandler (2) und weiter zurück in den jeweiligen Vorratstank (31, 32) in Form eines Kreislaufprozesses, und einen Laderegler, einen Inverter und/oder eine Batteriesteuerung (5) zur Steuerung der Be- und Entladung der Energie,
**dadurch gekennzeichnet,**
**dass** ein Ladestandssensor (7) zur Bestimmung des Ladestandes eines Elektrolyten (33), insbesondere eines Anolyten und/oder eines Katolyten, durch Bestimmen der sich durch Laden und/oder Entladen ändernden Verhältnisse der chemischen Zusammensetzung des Elektrolyten (33) anhand der Ionenladung eines oder der chemischen Bestandteile des Elektrolyten (33), insbesondere nach einem Ladestandssensor (7) nach einem der Ansprüche 5 oder 6, sowie insbesondere zur Ausführung des Verfahrens nach einem der Ansprüche 1 bis 3, in und/oder an der Elektrolytleitung (3) vor, in, an und/oder hinter dem Energiewandler und/oder dem oder den Vorratstanks vorgesehen ist.

8. Vanadium-Redox-Durchflussbatterie (1) nach Anspruch 7,
**dadurch gekennzeichnet,**
**dass** der Ladestandssensor (7) mit dem Laderegler, Inverter und/oder der Batteriesteuerung (5) verbunden ist.

9. Vanadium-Redox-Durchflussbatterie (1) nach Anspruch 7 oder 8,
**dadurch gekennzeichnet,**
**dass** der Ladestandssensor (7) als optisch arbeitendes System ausgebildet ist, umfassend einen Sender (71) und einen Detektor (72), wobei zwischen dem Sender (71) und dem Detektor (72) das Elektrolyt **dass** der Sender (71) elektromagnetische Strahlung ausstrahlt, die den Elektrolyten (33) durchquert und vom Detektor (72) erfasst, wobei der Detektor (72) die Intensität der elektromagnetischen Strahlung nach dem Durchqueren des Elektrolyten (33) detektiert.

10. Vanadium-Redox-Durchflussbatterie (1) nach Anspruch 7, 8 oder 9,
**dadurch gekennzeichnet,**
**dass** der Sender (71) elektromagnetische Strahlung (74) zeitgleich einer, mehrerer und/oder zeitlich variierter Wellenlänge durch den Elektrolyten (33) aussendet und der Detektor (72) die ausgesandte und den Elektrolyten (33) durchquerte elektromagnetische Strahlung (74) empfängt, besonders bevorzugt die Intensität der elektromagnetischen Strahlung (74) detektiert.

11. Vanadium-Redox-Durchflussbatterie (1) nach einem der Ansprüche 7 bis 10,
**dadurch gekennzeichnet,**
**dass** eine Auswerteeinheit zur Auswertung der Intensität der den Elektrolyten (33) durchlaufenden elektromagnetischen Strahlung (74), besonders bevorzugt zur Auswertung der zeitlichen Änderung der Intensität der den Elektrolyten (33) durchlaufenden elektromagnetischen Strahlung (74) vorgesehen ist.

12. Vanadium-Redox-Durchflussbatterie (1) nach einem der Ansprüche 7 bis 11,
**dadurch gekennzeichnet,**
**dass** bei mehreren elektrochemischen Energiewandlern (2) und/oder bei mehreren in einem elektrochemischen Energiewandler (2) angeordneten Elektroden (21, 22) jeweils ein Ladestandssensor (7) einem elektrochemischen Energiewandler (2) bzw. jeweils einer Elektrode (21, 22) oder einem Abschnitt zugeordnet ist, wobei eine entsprechende Steuerung jedes einzelnen elektrochemischen Energiewandlers (2) bzw. jeder einzelnen Elektrode (21, 22) oder dem jeweiligen zugeordneten Abschnitt vorgesehen ist.

13. Verfahren zur Be- und/oder Entladung einer Vanadium-Redox-Durchflussbatterie (1), bevorzugt nach einem Verfahren nach einem der Ansprüche 1 bis 3, einem Ladestandssensor (7) nach Anspruch 4, 5 oder 6 und/oder einer Vanadium-Redox-Durchflussbatterie (1) nach einem der Ansprüche 7 bis 12,
**dadurch gekennzeichnet,**
**dass** eine kontinuierliche Überwachung des Elektrolyten (33) auf sich verändernde Intensität des den Elektrolyten durchquerten elektromagnetischen Strahlung erfolgt, wobei bei der Detektion einer veränderten chemischen Zusammensetzung des Elektrolyten ein Ladestandssignal an eine Batteriesteuerung (5) signalisiert wird, und eine Änderung in der Regelung der Be- und/oder Entladung der Vanadium-Redox-Durchflussbatterie (1) auslöst,
wobei insbesondere die Änderung in der Regelung der Be- und/oder Entladung der Durchflussbatterie (1) eine Anpassung der Spannung zwischen den Elektroden (21, 22), bevorzugt eine Reduzierung der Spannung, beinhaltet.
